# FASCICULE DE BREVET EUROPEEN

(11) **EP 3 146 432 B1**
(45) Date de publication et mention de la délivrance du brevet: **24.11.2021**
(21) Numéro de dépôt: 15732024.3
(22) Date de dépôt: 12.05.2015
(51) Int. Cl.: G06F 11/07, G06F 1/24

(54) **PROCÉDÉ D'OBTENTION D'INFORMATIONS STOCKÉES DANS DES REGISTRES DE MODULE(S) DE TRAITEMENT D'UN CALCULATEUR JUSTE APRÈS LA SURVENUE D'UNE ERREUR FATALE**
VERFAHREN ZUR GEWINNUNG VON INFORMATIONEN, DIE IN VERARBEITUNGSMODULREGISTERN EINES COMPUTERS KURZ NACH AUFTRETEN EINES VERHEERENDEN FEHLERS GESPEICHERT WURDEN
METHOD OF OBTAINING INFORMATION STORED IN PROCESSING MODULE REGISTERS OF A COMPUTER JUST AFTER THE OCCURRENCE OF A FATAL ERROR

(30) Priorité: 20.05.2014 FR 1454504
(43) Date de publication de la demande: 29.03.2017
(73) Titulaire: Bull SAS, 78340 Les Clayes-sous-Bois (FR)
(72) Inventeur: BRASSAC, Claude, 78100 Saint-Germain-en-Laye (FR); BRUNET, Michel, 49190 Denée (FR)
(74) Mandataire: Cabinet Camus Lebkiri
(86) Numéro de dépôt international: PCT/FR2015/051242
(87) Numéro de publication internationale: WO 2015/177436

(56) Documents cités:
- US-A1- 2003 115 516
- US-A1- 2008 270 827
- US-B1- 6 643 802
- None

## Description

L'invention concerne les calculateurs comprenant au moins un module de traitement comportant un contrôleur de gestion (parfois appelé « processeur de service » ou « management controller ») et un circuit logique programmable (ou FPGA (« Field Programmable Gâte Array »)), qui permettent l'obtention d'informations stockées dans des registres de différents composants matériels (ou « hardware ») d'un module de traitement en cas de survenue d'une erreur fatale.

On entend ici par « calculateur » un ordinateur comprenant un ou plusieurs modules de traitement pouvant effectuer des tâches en parallèle et/ou en série. Chaque module de traitement est équipé d'un contrôleur de gestion, d'au moins un processeur, d'un circuit logique programmable et d'un commutateur de cohérence mémoire (comme par exemple un BCS2 (« Bull Coherent Switch release 2 ») assurant la cohérence des mémoires entre les différents modules de traitement et permettant ainsi de faire croire au système d'exploitation (ou OS) que ses modules de traitement forment un unique module. A titre d'exemple, il pourra s'agir d'un ordinateur de type serveur d'entreprise ou d'un ordinateur servant de nœud de calcul (ou de service) d'un supercalculateur.

Comme le sait l'homme de l'art, lorsqu'un calculateur (comme par exemple un serveur) tombe en panne consécutivement à la survenue d'une erreur fatale due à du matériel, il est indispensable de connaître certaines au moins des informations qui sont stockées dans certains registres internes de certains de ses composants juste après la survenue de cette erreur fatale, afin de pouvoir déterminer la source de cette dernière et donc le composant en situation d'erreur. C'est notamment le cas des registres du (des) processeur(s) (ou CPU (« Central Processing Unit »)), du circuit logique programmable (ou FPGA (« Field Programmable Gate Array »)) et du commutateur de cohérence mémoire (ou BCS (« Bull Coherent Switch »)).

Pour ce type d'erreur sévère, le système d'exploitation (ou OS) ne peut pas obtenir d'informations par ses propres mécanismes internes de gestion de fautes (« ErrorHandler ») car le calculateur est considéré comme corrompu et doit être redémarré au plus vite avant que des données vitales ne soient corrompues. Ainsi, un CPU faisant l'objet d'une erreur fatale décide luimême du redémarrage (ou réinitialisation ou encore « reset ») de son calculateur, ce qui empêche le système d'exploitation associé de prendre la main.

Ce redémarrage efface le contenu des registres volatils et donc empêche toute obtention d'information après qu'il ait eu lieu, hormis celles qui sont stockées dans des registres dits « sticky », et encore dans une situation très particulière.

L'invention a donc notamment pour but d'améliorer la situation, et notamment de permettre l'obtention, consécutivement à la survenue d'une erreur fatale, d'informations stockées dans certains registres de chaque module de traitement d'un calculateur dans lequel chaque module de traitement comprend en outre un contrôleur de gestion, propre à lire les informations stockées dans les registres associés, et un circuit logique programmable propre à déclencher une réinitialisation (ou un « reset ») requis(e) consécutivement à une erreur fatale.

Elle propose notamment à cet effet un procédé dans lequel, en cas de réception d'une requête de réinitialisation par un circuit logique programmable d'un module de traitement, ce circuit logique programmable suspend le déclenchement de cette réinitialisation et alerte de la survenue d'une erreur fatale le contrôleur de gestion associé qui, s'il en est capable, lit les informations stockées dans des registres associés et choisis, puis stocke ces informations lues dans un fichier, puis on autorise le circuit logique programmable associé à déclencher cette réinitialisation requise.

On peut ainsi récupérer le contenu de certains registres quasiment en temps réel, et plus précisément juste après le signalement de la survenue d'une erreur fatale, en vue d'analyser la cause de cette dernière.

Le document US2008/270827-A décrit une technique de capture de données de registres suite à une erreur et de suspension de réinitialisation pour assurer ladite capture.

L'invention est définit par le jeu des revendications 1-7.

Le procédé selon l'invention peut comporter d'autres caractéristiques qui peuvent être prises séparément ou en combinaison, et notamment :
- lorsque le contrôleur de gestion ne peut pas lire les informations stockées dans les registres associés et choisis, on peut autoriser le circuit logique programmable associé à déclencher la réinitialisation requise, et on peut bloquer une phase d'initialisation sur un point de synchronisation entre le contrôleur de gestion et un système élémentaire d'entrée/sortie du module de traitement, puis le contrôleur de gestion peut lire les informations stockées dans des registres associés et choisis, puis stocker ces informations lues dans un fichier, puis on peut redémarrer le calculateur ;
- chaque contrôleur de gestion peut choisir des registres associés parmi une liste de registres qu'il stocke ;
   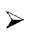 la liste peut comprendre une première partie comportant des registres à lire avant une réinitialisation, et une seconde partie comportant des registres à lire après une réinitialisation ;
- en présence d'un module de traitement maître et d'au moins un module de traitement esclave, lorsqu'un module de traitement esclave comprend un circuit logique programmable ayant reçu une requête de réinitialisation, le contrôleur de gestion associé peut alerter le contrôleur de gestion du module de traitement maître de la survenue d'une erreur fatale dans son module de traitement esclave, puis le contrôleur de gestion du module de traitement maître peut transmettre au contrôleur de gestion de chaque module de traitement une autorisation de lecture synchronisée des informations stockées dans des registres associés et choisis ainsi qu'un nom d'instance pour le fichier dans lequel il doit stocker ces informations lues ;
   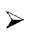 le contrôleur de gestion de chaque module de traitement peut signaler la génération de son fichier au contrôleur de gestion du module de traitement maître, et le contrôleur de gestion du module de traitement maître peut informer chaque circuit logique programmable d'un module de traitement qu'il est autorisé à déclencher une réinitialisation lorsqu'il a reçu une signalisation de génération de fichier de chaque contrôleur de gestion d'un module de traitement, puis le contrôleur de gestion du module de traitement maître peut déclencher un redémarrage du calculateur ;
      - avant de déclencher le redémarrage du calculateur, le contrôleur de gestion du module de traitement maître peut générer un message d'alerte pour signaler que des fichiers ont été stockés dans chacun des modules de traitement maître et esclave(s).

L'invention propose également un produit programme d'ordinateur comprenant un jeu d'instructions qui, lorsqu'il est exécuté par des moyens de traitement, est propre à mettre en œuvre un procédé de contrôle du type de celui présenté ci-avant pour obtenir des informations stockées dans des registres d'au moins un module de traitement d'un calculateur consécutivement à la survenue d'une erreur fatale.

L'invention propose également un calculateur comprenant au moins un module de traitement comportant des registres stockant des informations, un contrôleur de gestion propre à lire les informations stockées dans ces registres, et un circuit logique programmable propre à déclencher une réinitialisation requise consécutivement à une erreur fatale. En cas de réception d'une requête de réinitialisation par un circuit logique programmable d'un module de traitement, ce circuit logique programmable est agencé pour suspendre le déclenchement de cette réinitialisation et pour alerter de la survenue d'une erreur fatale le contrôleur de gestion qui lui est associé, et ce dernier est agencé, s'il en est capable, pour lire les informations stockées dans des registres associés et choisis, puis pour stocker ces informations lues dans un fichier, avant que le circuit logique programmable associé soit autorisé à déclencher la réinitialisation requise.

Par exemple, lorsque le contrôleur de gestion ne peut pas lire les informations stockées dans les registres associés et choisis, le circuit logique programmable associé peut être agencé, s'il est autorisé, pour déclencher la réinitialisation requise, et, ce contrôleur de gestion peut être agencé, consécutivement à un blocage d'une phase d'initialisation sur un point de synchronisation entre lui et un système élémentaire d'entrée/sortie de son module de traitement, pour lire les informations stockées dans des registres associés et choisis, puis pour stocker ces informations lues dans un fichier.

D'autres caractéristiques et avantages de l'invention apparaîtront à l'examen de la description détaillée ci-après, et des dessins annexés, sur lesquels :
- la figure 1 illustre de façon schématique et fonctionnelle un calculateur à J modules de traitement selon l'invention, et
- la figure 2 illustre un exemple d'algorithme mettant en œuvre un procédé d'obtention d'informations selon l'invention.

L'invention a notamment pour objet de proposer un procédé destiné à permettre l'obtention d'informations stockées dans des registres Rij d'au moins un module de traitement MTj d'un calculateur CA consécutivement à la survenue d'une erreur fatale.

On considère dans ce qui suit, à titre d'exemple non limitatif, que le calculateur CA est un serveur d'entreprise. Mais l'invention n'est pas limitée à ce type de calculateur. Elle concerne en effet tout système informatique comprenant un ou plusieurs modules de traitement pouvant effectuer des tâches en parallèle et/ou en série. Ainsi, il pourra également s'agir d'un ordinateur servant de nœud de calcul (ou de service) d'un supercalculateur.

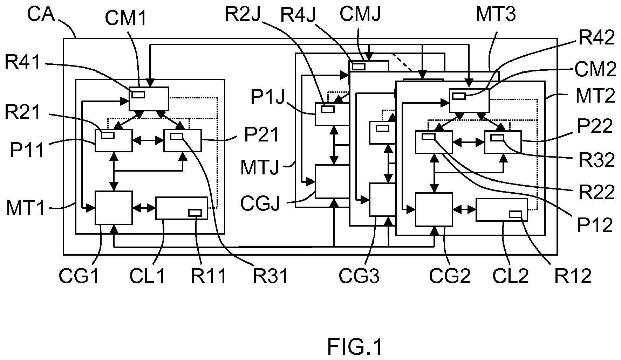

On a schématiquement illustré sur la figure 1 un exemple non limitatif de calculateur CA, ici un serveur, comprenant J modules de traitement MTj (j = 1 à J). Par exemple, J est égal à 8. Mais J peut prendre n'importe quelle valeur supérieure ou égale à un.

Parmi ces J modules de traitement MTj, l'un d'entre eux est dit maître, tandis que les J-1 autres sont dits esclaves.

Chaque module de traitement MTj comprend au moins des registres Rij stockant des informations, un contrôleur de gestion (ou « management controller ») CGj, propre à lire les informations qui sont stockées dans ces registres Rij, un circuit logique programmable (ou FPGA (« Field Programmable Gate Array »)) CLj, propre à déclencher une réinitialisation (ou « reset ») qui a été requise consécutivement à la survenue d'une erreur fatale due à un matériel (ou « hardware »), un système élémentaire d'entrée/sortie (ou BIOS (« Basic Input Output System ») - ici non représenté), des mémoires (non représentées), et au moins un processeur (ou CPU (« Central Processing Unit »)) P1j ou P2j.

On notera que lorsque le calculateur CA comprend plusieurs modules de traitement MTj, comme illustré sur la figure 1, chacun de ces derniers (MTj) comprend également un commutateur de cohérence mémoire CMj (comme par exemple un BCS2 (« Bull Coherent Switch release 2 ») qui assure la cohérence des mémoires entre les différents modules de traitement MTj et permet ainsi de faire croire au système d'exploitation (ou OS) que ses modules de traitement MTj forment un unique module. En d'autres termes, chaque commutateur de cohérence mémoire CMj permet d'offrir un accès cohérent à n'importe quelle mémoire de n'importe quel module de traitement MTj à partir de n'importe quel processeur P1J, P2j de n'importe quel module de traitement MTj.

Chaque contrôleur de gestion CGj assure une fonction dite SMC (« Satellite Management Controller ») qui gère les accès au matériel (hardware) de son module de traitement MTj, comme par exemple la lecture d'un registre de processeur P1j ou P2j ou d'un commutateur de cohérence mémoire CMj ou l'accès à un capteur de température.

Le contrôleur de gestion CG1 du module de traitement maître MT1 assure, en supplément d'un contrôleur de gestion CGj' (j' ≠ 1) d'un module de traitement esclave MTj', une fonction dite BMC (« Baseboard Management Controller ») qui gère notamment les extinctions (« power off ») et allumages (ou démarrages (« power on »)) du calculateur CA, les réinitialisations (ou « resets »), les autorisations de lecture de registres Rij, et la synchronisation inter modules de traitement MTj.

On notera également que les registres Rij de chaque module de traitement MTj, qui sont concernés par l'invention (et donc dans lesquels des informations doivent être récupérées en cas d'erreur fatale), font partie du circuit logique programmable CLj (ici R1j), de chaque processeur (ici R2j et R3j), et du commutateur de cohérence mémoire CMj (ici R4j).

Au sein de chaque module de traitement MTj, les communications entre le contrôleur de gestion CGj et le commutateur de cohérence mémoire CMj peuvent se faire via une interface I2C, les communications entre les processeurs P1j et P2j et le commutateur de cohérence mémoire CMj peuvent se faire via une interface QPI (« Quick Path Interconnect »), les communications entre le contrôleur de gestion CGj et les processeurs P1j et P2j peuvent se faire via une interface PECI, et les communications entre le contrôleur de gestion CGj et le circuit logique programmable CLj peuvent se faire via une interface xbus.

Par ailleurs, les communications entre les commutateurs de cohérence mémoire CMj des différents modules de traitement MTj peuvent se faire via un réseau de communication de type XQPI (« eXtended QPI »), et les communications entre les contrôleurs de gestion CGj des différents modules de traitement MTj peuvent se faire via un réseau Ethernet.

Comme indiqué plus haut, l'invention propose un procédé destiné à permettre l'obtention d'informations stockées dans des registres Rij de chaque module de traitement MTj d'un calculateur CA.

Ce procédé peut être mis en œuvre par un calculateur CA selon l'invention, chaque fois qu'un circuit logique programmable CLj d'un module de traitement MTj reçoit une requête de réinitialisation (ou reset) d'un processeur P1j, P2j ou du commutateur de cohérence mémoire CMj suite à la survenue d'une erreur fatale. Selon ce procédé, lorsque la situation précitée survient, le circuit logique programmable CLj concerné suspend le déclenchement de la réinitialisation requise et alerte de la survenue d'une erreur fatale le contrôleur de gestion CGj qui lui est associé au sein de son module de traitement MTj.

Puis, si ce contrôleur de gestion CGj est capable de le faire (c'est-à-dire en a la possibilité), il lit les informations qui sont stockées dans des registres Rij associés et choisis de son module de traitement MTj, puis stocke ces informations lues dans un fichier. Ensuite, on autorise le circuit logique programmable CLj, qui a reçu la requête de réinitialisation, à déclencher la réinitialisation requise (et qu'il avait suspendue en attente d'instructions).

La capacité de lecture d'un contrôleur de gestion CGj dépend avant tout de la possibilité technique d'accéder aux registres Rij à l'instant considéré, ainsi qu'éventuellement de la réception d'une autorisation de lecture.

Il est important de noter que, lorsque le calculateur CA comprend plusieurs modules de traitement MTj, dont un maître MT1 et au moins un esclave MTj', et qu'un module de traitement esclave MTj' comprend un circuit logique programmable (esclave) CLj' ayant reçu une requête de réinitialisation, le contrôleur de gestion esclave CGj' associé peut alerter le contrôleur de gestion (maître) CG1 du module de traitement maître MT1 de la survenue d'une erreur fatale dans son module de traitement esclave MTj'. Ensuite, le contrôleur de gestion maître CG1 peut transmettre au contrôleur de gestion CGj de chaque module de traitement MTj (j = 1 à J) une autorisation de lecture synchronisée des informations stockées dans des registres Rij associés et choisis et un nom d'instance pour le fichier dans lequel il doit stocker ces informations lues. Ce fichier est stocké dans une mémoire non-volatile (par exemple de type flash) du contrôleur de gestion CGj. En d'autres termes, c'est le contrôleur de gestion maître CG1 qui supervise et autorise la lecture de registres choisis dans chacun des module de traitement maître MT1 et esclaves MTj'.

Cette option est destinée à récupérer les informations stockées dans tous les registres Rij utiles de tous les modules de traitement MTj, y compris ceux qui n'ont pas vu l'erreur fatale, afin de pouvoir connaître l'origine du problème. En effet, des transactions circulent entre les modules de traitement MTj et donc une erreur fatale peut être détectée par un module de traitement « consommateur » alors que l'erreur fatale vient d'un module de traitement « émetteur », et donc tous les contrôleurs de gestion CGj doivent être avertis qu'il y a eu une erreur fatale dans le calculateur CA afin qu'ils récupèrent les informations stockées dans leurs registres Rij respectifs. On notera cependant que lorsqu'une erreur fatale se produit, elle peut se propager de chip en chip et de module de traitement MTj en module de traitement MTj'. Par conséquent, il peut arriver que cette erreur fatale en déclenche d'autres dans un mécanisme de rafale dans un même module de traitement MTj, et dans ce cas il faut éviter d'effectuer des lectures de registres Rij en « cascades ».

De préférence, chaque contrôleur de gestion CGj signale la génération de son fichier au contrôleur de gestion maître CG1, puis ce dernier (CG1) informe chaque circuit logique programmable CLj qu'il est autorisé à déclencher une réinitialisation (ou reset) si il a reçu une signalisation de génération de fichier de chaque contrôleur de gestion CGj. Ensuite, le contrôleur de gestion maître CG1 peut déclencher un redémarrage (ou « reboot ») du calculateur CA.

On notera qu'avant de déclencher ce redémarrage du calculateur CA, le contrôleur de gestion maître CG1 peut générer un message d'alerte destiné à signaler à une personne responsable de ce calculateur CA que des fichiers relatifs à la survenue d'une erreur fatale ont été stockés dans chacun des modules de traitement MTj maître et esclave(s). Ces fichiers pourront ensuite être téléchargés sur un ordinateur et analysés à l'aide d'un outil d'aide au diagnostic.

On notera également qu'il peut arriver qu'un contrôleur de gestion CGj ne puisse pas lire les informations qui sont stockées dans les registres Rij associés et choisis, par exemple après avoir reçu l'éventuelle autorisation du contrôleur de gestion maître CG1. Cette situation peut par exemple survenir dans certaines situations d'erreur fatale particulièrement grave lorsqu'un contrôleur de gestion CGj n'a plus accès aux processeurs P1j et P2j et/ou au commutateur de cohérence mémoire CMj car leurs bus d'accès (PECI et I2C) sont bloqués.

Dans ce dernier cas, on peut tout d'abord autoriser le circuit logique programmable CLj qui est associé à ce contrôleur de gestion CGj à déclencher la réinitialisation (ou reset) requise, et on peut bloquer une phase d'initialisation sur un point de synchronisation entre ce contrôleur de gestion CGj et le système élémentaire d'entrée/sortie (ou BIOS) de son module de traitement MTj. Ce reset a pour effet de débloquer les bus de données et donc de permettre au contrôleur de gestion CGj d'accéder de nouveau aux processeurs P1j et P2j et au commutateur de cohérence mémoire CMj, et le blocage du BIOS aussitôt après ce reset permet d'éviter que son démarrage corrompe le contenu des registres sticky. On comprendra que dans ce cas seuls les registres sticky seront lus, puisque tous les autres registres auront été remis à leurs valeurs après reset (en général zéro) alors que ces registres sticky gardent leurs valeurs d'avant reset. Les informations récupérées dans ce cas seront moins complètes mais peuvent néanmoins suffire dans de nombreuses situations.

Ensuite, le contrôleur de gestion CGj peut lire les informations qui sont stockées dans des registres Rij associés et choisis de son module de traitement MTj, éventuellement après avoir été autorisé à le faire par le contrôleur de gestion maître CG1. En fait, seuls les registres de type dit « sticky » peuvent être lus sans crainte d'avoir été corrompus par le reset qui vient tout juste de se produire. Puis, ce contrôleur de gestion CGj peut mettre ces informations lues dans un fichier qu'il stocke dans une mémoire non-volatile (par exemple de type flash). Enfin, on peut redémarrer le calculateur CA en effectuant une procédure dite « power cycle ») consistant à éteindre le calculateur CA puis à le rallumer afin de remettre les registres de type sticky à leurs valeurs par défaut respectives. Cette procédure est utile après une erreur fatale car la cohérence du contenu des registres sticky n'est pas assurée. Par exemple, ce redémarrage peut être déclenché par le contrôleur de gestion maître CG1.

Afin d'accélérer la lecture des registres Rij, chaque contrôleur de gestion CGj peut choisir les registres Rij qu'il est autorisé à lire dans son module de traitement MTj parmi une liste de registres qu'il stocke dans une mémoire non volatile. Par exemple, cette liste peut comprendre une première partie comportant des registres qui doivent être lus avant qu'une réinitialisation (ou reset) ait été effectuée, et une seconde partie comportant des registres qui doivent être lus après qu'une réinitialisation (ou reset) ait été effectuée. Les registres de cette première partie appartiennent essentiellement aux processeurs P1j et P2j et au circuit logique programmable CLj (ce dernier contient notamment une information importante qui indique quelle est la première erreur fatale qui a eu lieu dans le calculateur CA (quel processeur ou quel commutateur de cohérence mémoire CMj de quel module de traitement MTj)). Les registres de cette seconde partie sont essentiellement de type sticky, et donc font partie des commutateurs de cohérence mémoire CMj et des processeurs P1j et P2j (il s'agit par exemple de registres de type CSR (« Control and Status Register ») avec adressage « Bus/Device/function »).

On notera que la première partie de la liste peut être éventuellement et avantageusement subdivisée en sous-parties associées aux différents types de processeurs P1j, P2j et au circuit logique programmable CLj (registres d'erreurs avec adressage « Page/Offset »). Par exemple, une sous-partie peut être dédiée aux registres de type MSR (« Model Specific Register ») en adressage « Offset + CoreID » d'un type de processeur, et une autre sous-partie peut être dédiée aux registres de type CSR avec adressage « Bus/Device/function » d'un autre type de processeur. Lorsque cette option existe, chaque contrôleur de gestion CGj commence par déterminer le type du processeur auquel il doit s'adresser, puis il sélectionne la sous-partie de la première partie de la liste qui est associée à ce type de processeur. Cela permet d'avoir un même programme dans chaque contrôleur de gestion CGj quel que soit le(s) type(s) de processeur(s) que comprend son module de traitement MTj.

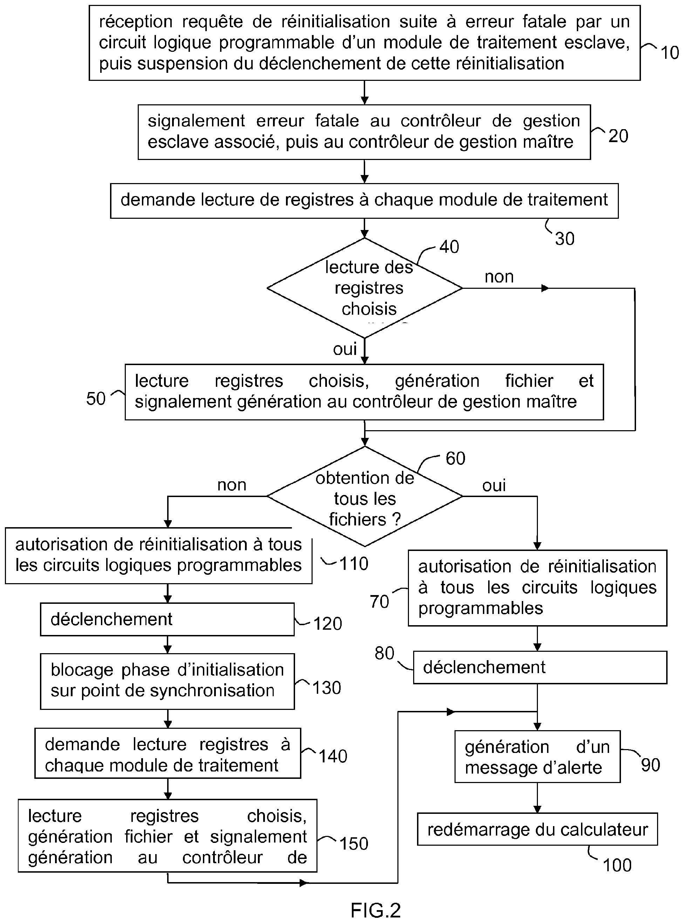

On a schématiquement illustré sur la figure 2 un exemple d'algorithme mettant en œuvre un exemple de procédé d'obtention d'informations selon l'invention.

Cet algorithme comprend une étape 10 dans laquelle un circuit logique programmable esclave CLj' (par exemple CL2) reçoit une requête de réinitialisation (ou reset) du fait de la survenue d'une erreur fatale dans son module de traitement esclave MT2, et par conséquent suspend le déclenchement de cette réinitialisation.

L'algorithme se poursuit par une étape 20 dans laquelle le circuit logique programmable esclave CL2 alerte de la survenue d'une erreur fatale le contrôleur de gestion CG2 associé. Puis, ce dernier (CG2) alerte le contrôleur de gestion maître CG1 de la survenue d'une erreur fatale dans son module de traitement esclave MT2.

Puis, dans une étape 30, le contrôleur de gestion maître CG1 transmet à chacun des contrôleurs de gestion CG1 à CGJ une autorisation de lecture synchronisée des informations qui sont stockées dans des registres Rij associés et choisis de leurs modules de traitement MT1 à MTJ respectifs, ainsi qu'un nom d'instance pour les fichiers dans lesquels ils vont stocker les informations qu'ils auront réussi à lire.

Puis, dans une étape 40, chaque contrôleur de gestion CGj (j = 1 à J) détermine s'il est possible de lire les informations qui sont stockées dans des registres Rij associés et choisis (par exemple ceux prédéfinis du premier groupe de la liste stockée). Dans la négative, on passe à une étape 60. En revanche, dans l'affirmative on effectue une étape 50 dans laquelle chaque contrôleur de gestion CGj lit les informations qui sont stockées dans les registres Rij associés et choisis, puis stocke ces informations lues dans un fichier ayant le numéro d'instance fourni par le contrôleur de gestion maître CG1, puis signale la génération de son fichier au contrôleur de gestion maître CG1.

Puis, dans une étape 60, le contrôleur de gestion maître CG1 effectue un test pour déterminer s'il a reçu les J fichiers des J modules de traitement MTj. Dans la négative on effectue une étape 110 qui sera décrite plus loin. Dans l'affirmative on effectue une étape 70 dans laquelle le contrôleur de gestion maître CG1 informe chaque circuit logique programmable CLj (qu'il soit esclave ou maître) qu'il est autorisé à déclencher une réinitialisation (ou reset) de son module de traitement MTj.

Puis, dans une étape 80, chaque circuit logique programmable esclave CLj (qu'il soit esclave ou maître) déclenche une réinitialisation (ou reset) de son module de traitement MTj.

Puis, dans une étape 90, le contrôleur de gestion maître CG1 génère un message d'alerte destiné à signaler à une personne responsable de son calculateur CA que des fichiers relatifs à la survenue d'une erreur fatale ont été stockés dans chacun des modules de traitement MTj maître et esclave(s).

Puis, dans une étape 100, le contrôleur de gestion maître CG1 déclenche un redémarrage (ou « reboot ») du calculateur CA de type power cycle.

Lorsque le test effectué à l'étape 60 est négatif, et donc qu'au moins un registre Rij n'a pas pu être lu dans au moins un module de traitement MTj, on effectue une étape 110 dans laquelle le contrôleur de gestion maître CG1 informe chaque circuit logique programmable CLj (qu'il soit esclave ou maître) qu'il est autorisé à déclencher une réinitialisation (ou reset) de son module de traitement MTj.

Puis, dans une étape 120, chaque circuit logique programmable esclave CLj (qu'il soit esclave ou maître) déclenche une réinitialisation (ou reset) de son module de traitement MTj afin de débloquer les bus de données.

Puis, dans une étape 130, chaque contrôleur de gestion CGj (qu'il soit esclave ou maître) bloque la phase d'initialisation sur un point de synchronisation entre lui (CGj) et le système élémentaire d'entrée/sortie (ou BIOS) de son module de traitement MTj afin d'éviter que le démarrage du BIOS corrompe le contenu des registres sticky.

Puis, dans une étape 140, le contrôleur de gestion maître CG1 transmet à chacun des contrôleurs de gestion CG1 à CGJ une autorisation de lecture synchronisée des informations qui sont stockées dans des registres Rij associés et choisis de leurs modules de traitement MT1 à MTJ respectifs, ainsi qu'un nom d'instance pour les fichiers dans lesquels ils vont stocker les informations qu'ils auront réussi à lire.

Puis, dans une étape 150 chaque contrôleur de gestion CGj lit les informations qui sont stockées dans les registres Rij associés et choisis (par exemple ceux du deuxième groupe de la liste stockée), puis stocke ces informations lues dans un fichier ayant le numéro d'instance fourni par le contrôleur de gestion maître CG1, puis signale la génération de son fichier au contrôleur de gestion maître CG1.

Puis, on effectue les étapes 90 et 100 décrites plus haut.

On notera que l'invention peut être également considérée sous la forme d'un produit programme d'ordinateur comprenant un jeu d'instructions qui, lorsqu'il est exécuté par des moyens de traitement d'un calculateur CA, est propre à mettre en œuvre un procédé de contrôle du type de celui décrit ci-avant pour obtenir des informations stockées dans des registres Rij d'au moins un module de traitement MTj du calculateur CA consécutivement à la survenue d'une erreur fatale.

L'invention ne se limite pas aux modes de réalisation de procédé d'obtention d'informations et de calculateur décrits ci-avant, seulement à titre d'exemple, mais elle englobe toutes les variantes que pourra envisager l'homme de l'art dans le cadre des revendications ci-après.

## Revendications

1. Procédé d'obtention d'informations stockées dans des registres (Rij) d'au moins un module de traitement (MTj) d'un calculateur (CA), chaque module de traitement (MTj) comprenant en outre un contrôleur de gestion (CGj) propre à lire les informations stockées dans les registres (Rij) d'une liste de registres qu'il stocke dans une mémoire non volatile, un circuit logique programmable (CLj) propre à déclencher une réinitialisation requise consécutivement à une erreur fatale, un système élémentaire d'entrée/sortie, et au moins un processeur (P1j, P2j) accessible par le contrôleur de gestion (CGj) via un bus d'accès et comportant au moins un des registres (Rij), la liste de registres (Rij) comportant une première partie comprenant des registres appartenant au processeur (P1j, P2j) et au circuit logique programmable (CLj) et une deuxième partie comprenant des registres de type « sticky » conservant les informations stockées tant que le système élémentaire d'entrée/sortie n'est pas démarré suite à une réinitialisation, selon lequel en cas de réception d'une requête de réinitialisation par un circuit logique programmable (CLj) d'un module de traitement (MTj), ce circuit logique programmable (CLj) suspend le déclenchement de cette réinitialisation (10) et alerte de la survenue d'une erreur fatale le contrôleur de gestion (CGj) associé (20), puis :
- si le contrôleur de gestion (CGj) peut lire les informations stockées dans les registres (Rij) de la première partie de la liste de registres, il lit les informations stockées dans les registres (Rij) de la première partie de la liste de registres, puis stocke ces informations lues dans un fichier (50), puis on autorise ledit circuit logique programmable (CLj) associé à déclencher ladite réinitialisation requise (70) ;
- si le bus de données entre le contrôleur de gestion (CGj) et le processeur (P1j, P2j) est bloqué, on autorise ledit circuit logique programmable (CLj) associé à déclencher ladite réinitialisation requise (110) pour débloquer le bus de données, et on bloque aussitôt le système élémentaire d'entrée/sortie dudit module de traitement (MTj, 130) pour éviter son démarrage, puis ledit contrôleur de gestion (CGj) lit les informations stockées dans les registres (Rij) de la deuxième partie de la liste de registres, puis stocke ces informations lues dans un fichier (150).

2. Procédé selon la revendication 1, **caractérisé en ce que** la première partie de la liste de registres comporte plusieurs sous-parties, chaque sous-partie étant associée à un type de processeurs (P1j, P2j) ou au circuit logique programmable (CLj), la lecture des informations stockées dans les registres (Rij) de la première partie de la liste de registre étant réalisée en lisant les informations stockées dans les registres (Rij) de chaque sous-partie de la première partie de la liste de registres en s'adressant au circuit logique programmable (CLj) associé ou aux processeurs (P1j, P2j) ayant le type de processeurs (P1j, P2j) associé.

3. Procédé selon l'une des revendications 1 à 2, **caractérisé en ce qu'**en présence d'un module de traitement (MT1) maître et d'au moins un module de traitement (MTj') esclave, lorsqu'un module de traitement (MTj') esclave comprend un circuit logique programmable (CLj') ayant reçu une requête de réinitialisation, le contrôleur de gestion (CGj') associé alerte le contrôleur de gestion (CG1) dudit module de traitement (MT1) maître de la survenue d'une erreur fatale dans son module de traitement (MTj') esclave, puis ledit contrôleur de gestion (CG1) du module de traitement (MT1) maître transmet au contrôleur de gestion (CGj) de chaque module de traitement (MTj) une autorisation de lecture synchronisée des informations stockées dans les registres (Rij) de la première partie de la liste de registres et un nom d'instance pour le fichier dans lequel il doit stocker ces informations lues (30).

4. Procédé selon la revendication 3, **caractérisé en ce que** le contrôleur de gestion (CGj) de chaque module de traitement (MTj) signale la génération de son fichier audit contrôleur de gestion (CG1) du module de traitement (MT1) maître, et ledit contrôleur de gestion (CG1) du module de traitement (MT1) maître informe chaque circuit logique programmable (CLj) d'un module de traitement (MTj) qu'il est autorisé à déclencher une réinitialisation lorsqu'il a reçu une signalisation de génération de fichier de chaque contrôleur de gestion (CGj) d'un module de traitement (MTj, 70), puis ledit contrôleur de gestion (CG1) du module de traitement (MT1) maître déclenche un redémarrage dudit calculateur (CA, 100).

5. Procédé selon l'une des revendications 3 et 4, **caractérisé en ce qu'**avant de déclencher ledit redémarrage du calculateur (CA), ledit contrôleur de gestion (CGj) du module de traitement (MTj) maître génère un message d'alerte pour signaler que des fichiers ont été stockés dans chacun desdits modules de traitement (MTj) maître et esclave(s) (90).

6. Produit programme d'ordinateur comprenant un jeu d'instructions qui, lorsqu'il est exécuté par des moyens de traitement, est propre à mettre en œuvre le procédé selon l'une des revendications précédentes pour obtenir des informations stockées dans des registres (Rij) d'au moins un module de traitement (MTj) d'un calculateur (CA) consécutivement à une erreur fatale.

7. Calculateur (CA) comprenant au moins un module de traitement (MTj) comportant des registres (Rij) stockant des informations, un contrôleur de gestion (CGj) propre à lire les informations stockées dans lesdits registres (Rij) compris dans une liste de registres qu'il stocke dans une mémoire non volatile, un circuit logique programmable (CLj) propre à déclencher une réinitialisation requise consécutivement à une erreur fatale, un système élémentaire d'entrée/sortie, et au moins un processeur (P1j, P2j) accessible par le contrôleur de gestion (CGj) via un bus d'accès et comportant au moins un des registres (Rij), la liste de registres (Rij) comportant une première partie comprenant des registres appartenant au processeur (P1j, P2j) et une deuxième partie comprenant des registres de type « sticky » conservant les informations stockées tant que le système élémentaire d'entrée/sortie n'est pas démarré suite à une réinitialisation, **caractérisé en ce qu'**en cas de réception d'une requête de réinitialisation par un circuit logique programmable (CLj) d'un module de traitement (MTj), ce circuit logique programmable (CLj) est agencé pour suspendre le déclenchement de cette réinitialisation (10) et pour alerter de la survenue d'une erreur fatale ledit contrôleur de gestion (CGj) associé (20), et ce dernier (CGj) est agencé :
- s'il peut lire les informations stockées dans les registres (Rij) de la première partie de la liste de registres, pour lire les informations stockées dans les registres (Rij) de la première partie de la liste de registres, puis pour stocker ces informations lues dans un fichier (50), avant que ledit circuit logique programmable (CLj) associé soit autorisé à déclencher ladite réinitialisation requise (70) ;
- si le bus de données entre le contrôleur de gestion (CGj) et le processeur (P1j, P2j) est bloqué, pour déclencher ladite réinitialisation requise (110) pour débloquer le bus de données, et, consécutivement à un blocage du système élémentaire d'entrée/sortie de son module de traitement (MTj, 130) pour éviter son démarrage, pour lire les informations stockées dans les registres (Rij) de la deuxième partie de la liste de registres, puis pour stocker ces informations lues dans un fichier (150).

## Patentansprüche

1. Verfahren zum Erhalten von Informationen, die in Registern (Rij) mindestens eines Verarbeitungsmoduls (MTj) eines Computers (CA) gespeichert sind, wobei jedes Verarbeitungsmodul (MTj) ferner einen Verwaltungscontroller (CGj), geeignet zum Lesen der gespeicherten Informationen in den Registern (Rij) einer Liste von Registern, die er in einem nichtflüchtigen Speicher speichert, eine programmierbare logische Schaltung (CLj), geeignet zum Auslösen einer nach einem schwerwiegenden Fehler erforderlichen Rücksetzung, ein elementares Ein-/Ausgabesystem und mindestens einen Prozessor (P1j, P2j) umfasst, auf den der Verwaltungscontroller (CGj) über einen Zugangsbus zugreifen kann und der mindestens eines der Register (Rij) umfasst, wobei die Liste der Register (Rij) einen ersten Teil mit Registern, die zum Prozessor (P1j, P2j) und zur programmierbaren logischen Schaltung (CLj) gehören, und einen zweiten Teil mit Registern vom Typ "sticky" umfasst, welche die gespeicherten Informationen beibehalten, solange das elementare Ein-/Ausgabesystem nicht als Folge einer Rücksetzung gestartet wird, wonach im Falle des Empfangs einer Rücksetzanforderung durch eine programmierbare logische Schaltung (CLj) eines Verarbeitungsmoduls (MTj) diese programmierbare logische Schaltung (CLj) die Auslösung dieser Rücksetzung (10) unterbricht und dem zugehörigen Verwaltungscontroller (CGj) (20) das Auftreten eines schwerwiegenden Fehlers signalisiert, woraufhin:
- wenn der Verwaltungscontroller (Cgj) die in den Registern (Rij) des ersten Teils der Liste von Registern gespeicherten Informationen lesen kann, die in den Registern (Rij) des ersten Teils der Liste von Registern gespeicherten Informationen liest und diese gelesenen Informationen dann in einer Datei (50) speichert, woraufhin die zugehörige programmierbare logische Schaltung (CLj) zum Auslösen der erforderlichen Rücksetzung autorisiert wird (70);
- wenn der Datenbus zwischen dem Verwaltungscontroller (CGj) und dem Prozessor (P1j, P2j) blockiert ist, die zugehörige programmierbare logische Schaltung (CLj) autorisiert wird, die erforderliche Rücksetzung (110) auszulösen, um den Datenbus zu entsperren, und das elementare Ein-/Ausgabesystem des Verarbeitungsmoduls (MTj, 130) sofort blockiert wird, damit es nicht startet, woraufhin der Verwaltungscontroller (CGj) die in den Registern (Rij) des zweiten Teils der Liste von Registern gespeicherten Informationen liest und diese gelesenen Informationen anschließend in einer Datei (150) speichert.

2. Verfahren nach Anspruch 1, **dadurch gekennzeichnet, dass** der erste Teil der Liste von Registern mehrere Unterabschnitte umfasst, wobei jeder Unterabschnitt einem Prozessortyp (P1j, P2j) oder einer programmierbaren logischen Schaltung (CLj) zugeordnet ist, wobei das Lesen der in den Registern (Rij) des ersten Teils der Liste von Registern gespeicherten Informationen durch Lesen der in den Registern (Rij) jedes Unterteils des ersten Teils der Liste von Registern gespeicherten Informationen erfolgt, indem die zugehörige programmierbare logische Schaltung (CLj) oder die Prozessoren (P1j, P2j) mit dem zugehörigen Prozessortyp (P1j, P2j) adressiert werden.

3. Verfahren nach einem der Ansprüche 1 bis 2, **dadurch gekennzeichnet, dass** bei Vorhandensein eines Master-Verarbeitungsmoduls (MT1) und mindestens eines Slave-Verarbeitungsmoduls (MTj'), wenn ein Slave-Verarbeitungsmodul (MTj') eine programmierbare logische Schaltung (CLj') umfasst, die eine Rücksetzanforderung erhalten hat, der zugehörige Verwaltungscontroller (CGj') dem Verwaltungscontroller (CG1) des Master-Verarbeitungsmoduls (MT1) das Auftreten eines schwerwiegenden Fehlers in seinem Slave-Verarbeitungsmodul (MTj') signalisiert, woraufhin der Verwaltungscontroller (CG1) des Master-Verarbeitungsmoduls (MT1) dem Verwaltungscontroller (CGj) jedes Verarbeitungsmoduls (MTj) eine synchronisierte Leseerlaubnis für die in den Registern (Rij) des ersten Teils der Liste von Registern gespeicherten Informationen und einen Instanznamen für die Datei übermittelt, in der er diese gelesenen Informationen (30) speichern soll.

4. Verfahren nach Anspruch 3, **dadurch gekennzeichnet, dass** der Verwaltungscontroller (CGj) jedes Verarbeitungsmoduls (MTj) das Erzeugen seiner Datei dem Verwaltungscontroller (CG1) des Master-Verarbeitungsmoduls (MT1) meldet und der Verwaltungscontroller (CG1) des Master-Verarbeitungsmoduls (MT1) jede programmierbare logische Schaltung (CLj) eines Verarbeitungsmoduls (MTj) informiert, dass sie zum Auslösen einer Rücksetzung autorisiert ist, wenn sie eine Dateierzeugungsmeldung von jedem Verwaltungscontroller (CGj) eines Verarbeitungsmoduls (MTj, 70) empfangen hat, woraufhin der Verwaltungscontroller (CG1) des Master-Verarbeitungsmoduls (MT1) einen Neustart des Computers (CA, 100) auslöst.

5. Verfahren nach einem der Ansprüche 3 und 4, **dadurch gekennzeichnet, dass** vor dem Auslösen des Neustarts des Computers (CA) der Verwaltungscontroller (CGj) des Master-Verarbeitungsmoduls (MTj) eine Warnmeldung generiert, um zu melden, dass Dateien in jedem der Master- und Slave-Verarbeitungsmodule gespeichert worden sind (90).

6. Computerprogrammprodukt, das einen Satz von Befehlen umfasst, der bei Ausführung durch Verarbeitungsmittel dazu geeignet ist, das Verfahren nach einem der vorstehenden Ansprüche zu implementieren, um Informationen zu erhalten, die in Registern (Rij) mindestens eines Verarbeitungsmoduls (MTj) eines Rechners (CA) nach einem schwerwiegenden Fehler gespeichert sind.

7. Rechner (CA) umfassend mindestens ein Verarbeitungsmodul (MTj) mit Registern (Rij), die Informationen speichern, einen Verwaltungscontroller (CGj), geeignet zum Lesen der gespeicherten Informationen in den Registern (Rij), die in einer Liste von Registern enthalten sind, die er in einem nichtflüchtigen Speicher speichert, eine programmierbare logische Schaltung (CLj), geeignet zum Auslösen einer nach einem schwerwiegenden Fehler erforderliche Rücksetzung, ein elementares Ein-/Ausgangssystem und mindestens einen Prozessor (P1j, P2j), auf den der Verwaltungscontroller (CGj) über einen Zugangsbus zugreifen kann und der mindestens eines der Register (Rij) umfasst, wobei die Liste von Registern (Rij) einen ersten Teil mit Registern, die zum Prozessor (P1j, P2j) gehören, und einen zweiten Teil mit Registern vom Typ "sticky" umfasst, welche die gespeicherten Informationen beibehalten, solange das elementare Ein-/Ausgabesystem nicht nach einer Rücksetzung gestartet wird, **dadurch gekennzeichnet, dass** für den Fall des Empfangs einer Rücksetzanforderung durch eine programmierbare logische Schaltung (CLj) eines Verarbeitungsmoduls (MTj) diese programmierbare logische Schaltung (CLj) eingerichtet ist, die Auslösung dieser Rücksetzung (10) zu unterbrechen und dem zugehörigen Verwaltungscontroller (Cgj) das Auftreten eines schwerwiegenden Fehlers zu signalisieren (20), und dass letzterer (CGj) zu Folgendem eingerichtet ist:
- wenn er die in den Registern (Rij) des ersten Teils der Liste von Registern gespeicherten Informationen lesen kann, die in den Registern (Rij) des ersten Teils der Liste von Registern gespeicherten Informationen zu lesen und diese gelesenen Informationen dann in einer Datei zu speichern (50), bevor die zugehörige programmierbare logische Schaltung (Clj) zum Auslösen der erforderlichen Rücksetzung autorisiert wird (70);
- wenn der Datenbus zwischen dem Verwaltungscontroller (CGj) und dem Prozessor (P1j, P2j) blockiert ist, die erforderliche Rücksetzung (110) auszulösen, um den Datenbus zu entsperren, und nach einer Blockierung des elementaren Ein-/Ausgangssystems seines Verarbeitungsmoduls (MTj, 130), um sein Starten zu verhindern, die in den Registern (Rij) des zweiten Teils der Liste von Registern gespeicherten Informationen zu lesen und diese gelesenen Informationen dann in einer Datei zu speichern (150).

## Claims

1. A method for obtaining information stored in registers (Rij) of at least one processing module (MTj) of a computer (CA), each processing module (MTj) further comprising a management controller (CGj) able to read the information stored in the registers (Rij) of a list of registers which it stores in a non-volatile memory, a programmable logic circuit (CLj) able to trigger a reset required following a fatal error, a basic input/output system, and at least one processor (P1j, P2j) which can be accessed by the management controller (CGj) via an access bus and having at least one of the registers (Rij), the list of registers (Rij) having a first part comprising registers belonging to the processor (P1j, P2j) and to the programmable logic circuit (CLj) and a second part comprising "sticky" type registers containing the stored information as long as the basic input/output system is not started following a reset, whereby in the event of receiving a reset request by a programmable logic circuit (CLj) of a processing module (MTj), this programmable logic circuit (CLj) suspends the triggering of this reset (10) and alerts the associated management controller (CGj) of the occurrence of a fatal error (20), then:
- if the management controller (CGj) can read the information stored in the registers (Rij) of the first part of the list of registers, it reads the information stored in the registers (Rij) of the first part of the list of registers, then stores this read information in a file (50), then said associated programmable logic circuit (CLj) is authorized to trigger said required reset (70);
- if the data bus between the management controller (CGj) and the processor (P1j, P2j) is blocked, said associated programmable logic circuit (CLj) is authorized to trigger said required reset (110) in order to unblock the data bus, and the basic input/output system of said processing module (MTj, 130) is blocked immediately to prevent it from starting, then said management controller (CGj) reads the information stored in the registers (Rij) of the second part of the list of registers, then stores this read information in a file (150).

2. The method according to claim 1, **characterized in that** the first part of the list of registers comprises several sub-parts, each sub-part being associated with one type of processors (P1j, P2j) or with the programmable logic circuit (CLj), the reading of the information stored in the registers (Rij) of the first part of the list of registers being performed by reading the information stored in the registers (Rij) of each sub-part of the first part of the list of registers by addressing the associated programmable logic circuit (CLj) or the processors (P1j, P2j) having the associated type of processors (P1j, P2j).

3. The method according to one of claims 1 to 2, **characterized in that** in the presence of a master processing module (MT1) and of at least one slave processing module (MTj'), when a slave processing module (MTj') comprises a programmable logic circuit (CLj') having received a reset request, the associated management controller (CGj') alerts the management controller (CG1) of said master processing module (MT1) of the occurrence of a fatal error in its slave processing module (MTj'), then said management controller (CG1) of the master processing module (MT1) transmits to the management controller (CGj) of each processing module (MTj) a synchronized read permission of the information stored in the registers (Rij) of the first part of the list of registers and an instance name for the file in which it must store this read information (30).

4. The method according to claim 3, **characterized in that** the management controller (CGj) of each processing module (MTj) signals the generation of its file to said management controller (CG1) of the master processing module (MT1), and said management controller (CG1) of the master processing module (MT1) informs each programmable logic circuit (CLj) of a processing module (MTj) that it is authorized to trigger a reset when it has received a signal of file generation from each management controller (CGj) of a processing module (MTj, 70), then said management controller (CG1) of the master processing module (MT1) triggers a restart of said computer (CA, 100).

5. The method according to one of claims 3 and 4, **characterized in that** prior to triggering said restart of the computer (CA), said management controller (CGj) of the master processing module (MTj) generates an alert message to signal that files have been stored in each of said master and slave processing modules (MTj) (90).

6. A computer program product comprising a set of instructions which, when it is executed by processing means, is able to implement the method according to one of the preceding claims in order to obtain information stored in registers (Rij) of at least one processing module (MTj) of a computer (CA) following a fatal error.

7. A computer (CA) comprising at least one processing module (MTj) comprising registers (Rij) storing information, a management controller (CGj) able to read information stored in said registers (Rij) comprised in a list of registers which it stores in a non-volatile memory, a programmable logic circuit (CLj) able to trigger a reset required following a fatal error, a basic input/output system, and at least one processor (P1j, P2j) accessible by the management controller (CGj) via an access bus and comprising at least one of the registers (Rij), the list of registers (Rij) having a first part comprising registers belonging to the processor (P1j, P2j) and a second part comprising "sticky" type registers containing the information stored as long as the basic input/output system is not started following a reset, **characterized in that** in the case of receiving a reset request by a programmable logic circuit (CLj) of a processing module (MTj), this programmable logic circuit (CLj) is arranged to suspend the triggering of this reset (10) and to alert said associated management controller (CGj) of the occurrence of a fatal error (20), and this latter (CGj) is arranged:
- if it can read the information stored in the registers (Rij) of the first part of the list of registers, to read the information stored in the registers (Rij) of the first part of the list of registers, then to store this read information in a file (50), before said associated programmable logic circuit (CLj) is authorized to trigger said required reset (70);
- if the data bus between the management controller (CGj) and the processor (P1j, P2j) is blocked, to trigger said required reset (110) in order to unblock the data bus, and, following blocking of the basic input/output system of its processing module (MTj, 130) to prevent it from starting, to read the information stored in the registers (Rij) of the second part of the list of registers, then to store this read information in a file (150).
